(19) Europäisches Patentamt

European Patent Office

Office européen des brevets

(11) Publication number: **0 116 777**
**B1**

(12) **EUROPEAN PATENT SPECIFICATION**

(45) Date of publication of patent specification: **21.03.90**

(21) Application number: **83307838.9**

(22) Date of filing: **21.12.83**

(51) Int. Cl.⁵: **G 01 S 3/80**

(54) **Acoustic direction finding systems.**

(30) Priority: **22.12.82 GB 8236058**

(43) Date of publication of application:
**29.08.84 Bulletin 84/35**

(45) Publication of the grant of the patent:
**21.03.90 Bulletin 90/12**

(84) Designated Contracting States:
**DE FR IT NL SE**

(56) References cited:
**EP-A-0 031 750**
**GB-A-2 096 854**
**US-A-3 383 690**
**US-A-3 633 205**
**US-A-3 859 621**
**US-A-3 935 575**

(73) Proprietor: **THE MARCONI COMPANY LIMITED**
**The Grove Warren Lane**
**Stanmore Middlesex HA7 4LY (GB)**

(72) Inventor: **Clare, Colin Peter**
**20 The Close**
**Iver Heath Buckinghamshire (GB)**

(74) Representative: **Sperling, David**
**Central Patent Dept. (Wembley Office) The**
**General Electric Company plc Hirst Research**
**Centre East Lane**
**Wembley Middlesex HA9 7PP (GB)**

Courier Press, Leamington Spa, England.

# EP 0 116 777 B1

**Description**

This invention relates to hydrophone acoustic direction finding systems.

In a known form of hydrophone system, a plurality of hydrophones are equally spaced in a cruciform array, and the direction of waves impinging on the array is determined in dependence upon the periods between zero-crossings of the waves detected by different pairs of hydrophones.

US Patent No. 3,383,690 discloses a direction finding system having one or more pairs of transducers disposed in a plane for detecting zero crossings of waves passing between the transducers of the or each pair. The system may be used for waves of audio frequency or radio frequency transmitted through the air or through water. Examples of arrangements having two pairs of transducers disposed at right angles include a three transducer arrangement with the two pairs having a common transducer and a four transducer arrangement with the two pairs having a common centre. In all cases having more than one pair of transducers the transducers of each pair are equally spaced, and furthermore that spacing is less than one half a wavelength at the highest frequency to be received.

Published Patent Application GB—2,096,854A discloses an example of a radio direction finding system having two antenna arrays disposed in the same plane. Both arrays have two equally spaced pairs of antennae arranged at right angles with a common centre. One array has the antennae of each pair spaced at less than half the wavelength of the radio signal and provides an approximate value of the bearing angle which is non-ambiguous in sense. The other array has the antennae of each pair spaced at more than half the wavelength of the radio signal and provides a fractional value of the bearing angle which is ambiguous in sense. The two values are combined to produce an accurate unambiguous bearing.

US Patent No. 3,633,205 is concerned with a problem of radio direction finding systems of the type exemplified by GB 2,096,854A, which is that the spacing of the close spaced array, the coarse channel, becomes very small in wavelength for reduced frequencies which limits the bandwidth of the system. There is therefore proposed an array of three antennae forming two pairs each having an antenna spacing at least equal to the wavelength of the highest frequency received, the spacing of one pair being greater than the spacing of the other pair by at least half the wavelength of the highest frequency. Each pair produces a fine channel ambiguous bearing, and a non-ambiguous coarse channel bearing is synthesised from the two fine channels.

The present invention is concerned with a problem which arises with a hydrophone direction finding system in accordance with US Patent No. 3,383,690 where all the transducer pairs have a spacing less than one half a wavelength at the highest frequency to be received. This is that for hydrophones of a given physical size there is a lower limit to their spacing and hence an upper limit to the frequency to be received where that spacing is less than half a wavelength.

An object of the present invention is to provide an improved hydrophone system.

According to the invention there is provided a hydrophone acoustic direction finding system comprising an array of hydrophone electro-acoustic transducers disposed along two orthogonal lines in a plane and measuring means responsive to periods between successive instants of zero-crossings of waves detected by the transducers of predetermined pairs of transducers in the array, characterised in that the array comprises at least five transducers disposed in two groups each having at least three transducers, one of which may be common to both groups, one group being along each said orthogonal line, the ratio of the spacings between predetermined different pairs of transducers in each of the two groups having the same non-integral value, in that said measuring means is responsive to periods between successive instants of zero-crossing of waves detected by a same transducer for at least one transducer of the array for determining the wavelength of waves impinging on the transducer array, and in that said measuring means is responsive to periods between a zero-crossing detection in one transducer of a predetermined pair of transducers and the successive zero-crossing detection in the other transducer of that pair for said predetermined different pairs of transducers in each of the two groups for making a comparison of such periods in respect of said different pairs, for checking in which of said comparisons the compared periods correspond to the times for a wavefront to pass between the transducers of the compared pairs being in the said non-integral ratio after due allowance for the fact that at least one of said periods may be determined by transducers responding to zero-crossings of different waves, and for checking the results of said checking in one orthogonal line against the results of said checking in the other orthogonal line for determining the quadrant in said plane emanating from the array in which lies the source of waves impinging thereon.

In the above-defined system the expression relating to "due allowance" necessarily implies that the minimum physical spacing of the transducers of each pair is greater than half a wavelength at the highest frequency of waves to be received by the system. However, in this system this minimum physical spacing may not be greater than one wavelength at this highest frequency.

Preferably the ratio of the spacings of said different pairs of transducers in each group is 1.5.

According to another aspect of the present invention there is provided a hydrophone acoustic direction finding system comprising an array of at least three hydrophone electro-acoustic transducers which are disposed in a plane so that no three of the transducers are in a straight line and measuring means responsive to periods between successive instants of zero-crossing of waves detected by the transducers of predetermined pairs of transducers in the array, characterised in that the array has five transducers

2

disposed at the corners of a regular pentagon, the ratio of the spacings between predetermined different pairs of transducers in the array having the same non-integral value of substantially 1.62, in that said measuring means is responsive to periods between successive instants of zero-crossing of waves detected by a same transducer for at least one transducer of the array for determining the wavelength of waves impinging on the transducer array, and in that said measuring means is responsive to periods between a zero-crossing detection in one transducer of a predetermined pair of transducers and the successive zero-crossing detection in the other transducer of that pair for said predetermined different pairs of transducers for making a comparison of such periods in respect of said different pairs, for checking in which of said comparisons the compared periods correspond to the times for a wavefront to pass between the transducers of the compared pairs being in the said non-integral ratio after due allowance for the fact that at least one of said periods may be determined by transducers responding to zero-crossings of the same wave and for determining from said verified periods the direction in said plane of the source of waves impinging on the array.

In the above-defined system the expression relating to "due allowance" necessarily implies that the minimum physical spacing of the transducers of each pair is greater than half a wavelength at the highest frequency of waves to be received by the system. Furthermore, in this system this minimum physical spacing may be greater than one wavelength at this highest frequency.

Examples of hydrophone systems and methods of operating same in accordance with the invention will now be described with reference to the five figures of the accompanying drawings in which:

Figure 1 shows the first hydrophone system diagrammatically,

Figures 2 and 3 are perspective views of two alternative hydrophone arrays for use with the first system,

Figure 4 shows the second system diagrammatically, and

Figure 5 is a perspective view of the hydrophone array of the second system.

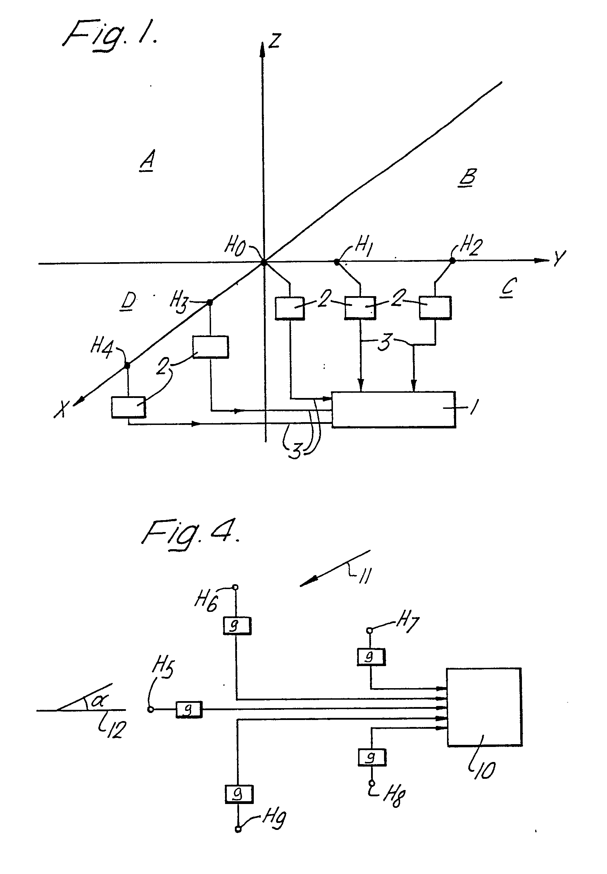

Referring to Figure 1 of the accompanying drawings, the first hydrophone system comprises an array of five hydrophones, $H_0$, $H_1$, $H_2$, $H_3$ and $H_4$, each of which is a piezo-electric transducer such as the Bruel and Kjaer type 8103. The two groups of hydrophones $H_0$, $H_1$ and $H_2$ and $H_0$, $H_3$ and $H_4$ are disposed respectively in two orthogonal lines which can conveniently be considered the Y and X axes respectively of a cartesian reference system having its origin at the location of the hydrophone $H_0$. The two hydrophones $H_1$ and $H_3$ are spaced a distance $d$ from the hydrophone $H_0$ while the pairs of hydrophones $H_1$, $H_2$ and $H_3$, $H_4$ are spaced a distance $3d/2$ apart.

Each of the five hydrophones $H_0$ and $H_4$ has associated electronic circuits 2 (of known form) for determining the instants of zero-crossing of acoustic waves impinging on the hydrophone and each such determination is signalled to a digital computer 1 over a path 3.

It may be mentioned here that the hydrophone system can be operated to obtain the direction (from the hydrophone array of such a source of waves up to a maximum frequency where the wavelength of these waves is not less than $d$).

During use of the hydrophone system, the individual hydrophones $H_0$ to $H_4$ respond to acoustic waves from a remote source in turn and the computer 1 is arranged to measure the delay between successive zero-crossings as follows:—

| Delay | Between |
|---|---|
| $t_1$ | $H_0$ and $H_1$ |
| $t_2$ | $H_0$ and $H_3$ |
| $t_3$ | $H_1$ and $H_2$ |
| $t_4$ | $H_3$ and $H_4$ |

The computer 1 is also arranged to measure the period $\tau$ between successive zero-crossings of waves impinging on the hydrophone array. This measurement may conveniently be effected in respect of one hydrophone, say the hydrophone $H_0$, but, although this period should be the same for all the hydrophones of the array, it may be preferable to derive a value for $\tau$ as the mean time between zero-crossings of each of the hydrophones $H_0$ to $H_4$.

The hydrophones $H_0$ to $H_4$ are, in fact, carried on a solid member (not shown but the surface of which lies generally in the X—Y plane of Figure 1) so that waves can only reach the hydrophone array from directions above the X—Y plane of the drawing.

From the measurements of $t_1$ to $t_4$ and $\tau$, the computer 1 is arranged to determine in which of the octants A, B, C or D lies the source of waves impinging on the hydrophone array as will now be described. For each of these octants there is a predetermined relationship between the measured times $t_1$ and $t_3$ and another predetermined relationship between the times $t_2$ and $t_4$ due to the geometry of the arrangement. In all cases there are however two possible relationships depending upon whether or not there is an

3

intervening zero-crossing of the incoming waves between the hydrophones $H_1$ and $H_2$ or between the hydrophones $H_3$ and $H_4$ as appropriate. It can be shown that these relationships are as follows:—

| Octant A | Octant B |
|---|---|

$$t_3 = \begin{cases} 3t_1/2 \\ \text{or} \\ 3t_1/2 - \tau \end{cases} \qquad t_3 = \begin{cases} (3t_1 + \tau)/2 \\ \text{or} \\ (3t_1 - \tau)/2 \end{cases}$$

$$t_4 = \begin{cases} 3t_2/2 \\ \text{or} \\ 3t_2/2 - \tau \end{cases} \qquad t_4 = \begin{cases} 3t_2/2 \\ \text{or} \\ 3t_2/2 - \tau \end{cases}$$

| Octant D | Octant C |
|---|---|

$$t_3 = \begin{cases} 3t_1/2 \\ \text{or} \\ 3t_1/2 - \tau \end{cases} \qquad t_3 = \begin{cases} (3t_1 + \tau)/2 \\ \text{or} \\ (3t_1 - \tau)/2 \end{cases}$$

$$t_4 = \begin{cases} (3t_2 + \tau)/2 \\ \text{or} \\ (3t_2 - \tau)/2 \end{cases} \qquad t_4 = \begin{cases} (3t_1 + \tau)/2 \\ \text{or} \\ (3t_1 - \tau)/2 \end{cases}$$

It will be noted that these relationships are different for each of the four octants. Thus, if $t_3$ is equal to either $3t_1/2$ or $3t_1/2 - \tau$ it follows that the wave source must be in either octant A or D while if $t_4$ is equal to $3t_2/2$ or $3t_2/2 - \tau$ the source must be in either octant A or B. It is therefore strictly only necessary for the computer 1 to effect the calculations and comparisons just referred to in order to ascertain the appropriate octant but, in practice, it may be more satisfactory for the computer 1 to effect all the calculations and comparisons listed above and then to determine the octant in which the wave source lies on a 'best fit' basis.

It may be mentioned that, if the hydrophone array had been responsive to waves from either side of the X—Y plane, the relationships just discussed could be utilised to determine the quadrant about the Z axis (in effect two octants one on either side of the X—Y plane) in which the wave source lies.

Reverting to the four octant case, it can be shwon that, if the direction of wave source, measured from the hydrophone array, makes angles $\theta_\alpha$ and $\theta_\beta$ to the X and Y axes in the X—Z and Y—Z planes respectively, these angles are given by the following expressions:—

| Octant A | Octant B |
|---|---|

$$\theta_\alpha = \begin{cases} 180 - \cos^{-1}(t_2/t_d) \\ 180 - \cos^{-1}(2t_4/3t_d) \\ 180 - \cos^{-1}(2(t_4 + \tau)/3t_d) \end{cases} \qquad \theta_\alpha = \begin{cases} 180 - \cos^{-1}(t_2/t_d) \\ 180 - \cos^{-1}(2t_4/3t_d) \\ 180 - \cos^{-1}(2(t_4 + \tau)/3t_d) \end{cases}$$

$$\theta_\beta = \begin{cases} 180 - \cos^{-1}(t_1/t_d) \\ 180 - \cos^{-1}(2t_3/3t_d) \\ 180 - \cos^{-1}(2(t_3 + \tau)/3t_d) \end{cases} \qquad \theta_\beta = \begin{cases} \cos^{-1}(\tau - t_1)/t_d) \\ \cos^{-1}(2(\tau - t_3)/3t_d) \\ \cos^{-1}(2(2\tau - t_3)/3t_d) \end{cases}$$

| Octant D | Octant C |
|---|---|

$$\theta_\alpha = \begin{cases} \cos^{-1}((\tau - t_2)/t_d) \\ \cos^{-1}(2(\tau - t_4)/3t_d) \\ \cos^{-1}(2(2\tau - t_4)/3t_d) \end{cases} \qquad \theta_\alpha = \begin{cases} \cos^{-1}((\tau - t_2)/t_d) \\ \cos^{-1}(2(\tau - t_4)/3t_d) \\ \cos^{-1}(2(2\tau - t_4)/3t_d) \end{cases}$$

$$\theta_\beta = \begin{cases} 180 - \cos^{-1}(t_1/t_d) \\ 180 - \cos^{-1}(2t_3/3t_d) \\ 180 - \cos^{-1}(2(t_3 + \tau)/3t_d) \end{cases} \qquad \theta_\beta = \begin{cases} \cos^{-1}\dfrac{(\tau - t_1)}{t_d} \\ \cos^{-1}(2(\tau - t_3)/3t_d) \\ \cos^{-1}(2(2\tau - t_3)/3t_d) \end{cases}$$

where $t_d$ is the time taken for a wavefront to traverse the distance $d$ in its direction of propagation.

Having first established the octant in which the wave source lies (as previously described), the computer 1 proceeds to calculate the value of each of the angles $\theta_\alpha$ and $\theta_\beta$ using the one of the alternative formulae which is likely to give the most accurate answer and a value of $t_d$ equal to the time taken for a wavefront to travel the distance $d$ in water, due correction to the velocity of sound in water being given for the temperature, pressure and salinity of the water.

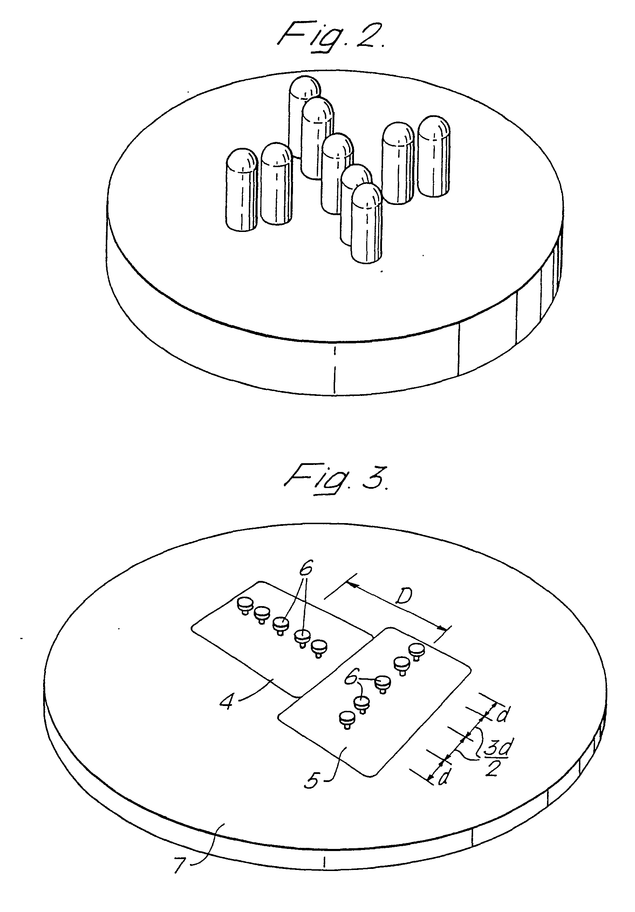

In practice, it may be convenient for the array to have four additional hydrophones with the total of nine hydrophones disposed in a symmetrical cruciform array centred on the hydrophone $H_0$, such an arrangement providing some redundant information but at the same time improving the overall performance of the system. Furthermore the spacing of the three hydrophones in each arm of the array may be changed, without affecting the basis of the determinations and calculations previously described, so that the spacing between the central hydrophone (corresponding to $H_0$) and the adjacent hydrophone (corresponding to $H_1$ or $H_3$) in each arm is 1.5 times the spacing between the two outer hydrophones of each arm. Such a hydrophone array is shown in Figure 2 of the accompanying drawings.

In the cruciform array of hydrophones, some hydrophones may be subject to acoustic shadowing by adjacent hydrophones. This can be reduced by having an array of 'T' configuration which is otherwise utilised in the same way as previously described. Such an array is shown in Figure 3 of the drawings and comprises two like modules 4 and 5 each having five sub-miniature hydrophones 6 mounted on a steel plate 7, the distance D between the centres of the two modules 4 and 5 being not more than a few wavelengths at the frequency of use.

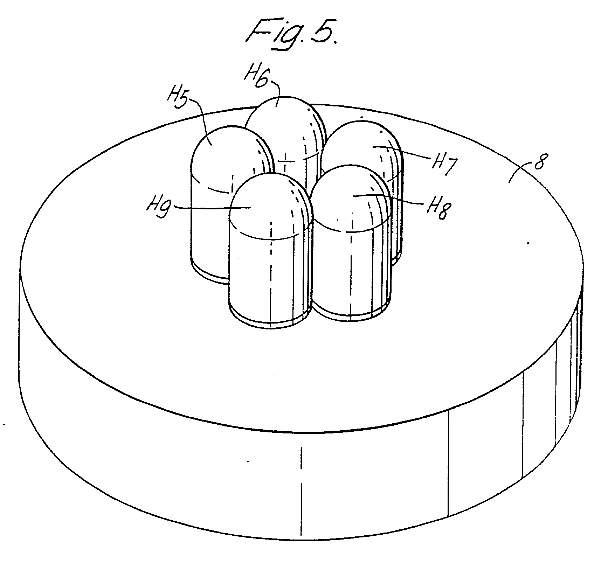

Referring now to Figures 4 and 5 of the accompanying drawings, the second form of hydrophone system to be described comprises five hydrophones $H_5$ to $H_9$ which are located at the corners of a regular pentagon. The hydrophones $H_5$ to $H_9$ are mounted on a steel plate 8. Again the instants of zero-crossings of waves impinging on the hydrophones $H_5$ to $H_9$ are detected by circuits 9 and signalled to a digital computer 10.

In this embodiment of the invention, the computer 10 is arranged to store information identifying the times of occurrence (relative to an arbitrary reference) of at least the first, second and third zero-crossings detected by each of the five hydrohpones $H_5$ to $H_9$ after the commencement of a computation sequence to ascertain the direction of a source of waves impinging on the array. From this information, the computer 10 calculates and stores the periods between each of the first zero-crossings detected by each of the hydrophones $H_5$ to $H_9$ and each of the first, second and third zero-crossings detected by each of the other hydrophones. One example of the periods so calculated is that between the first zero-crossing detected by the hydrophone $H_5$ and the first zero-crossing detected by the hydrophone $H_7$ while another example is the period between the first zero-crossing detected by the hydrophone $H_6$ and the third zero-crossing detected by the hydrophone $H_9$.

It will be appreciated from the geometry of the hydrophone array that the time taken for any given wavefront to pass from hydrophone $H_5$ to hydrophone $H_8$ will always be in a fixed ratio of sin 54° (approximately 1.618) to the time taken for the same wavefront to pass from the hydrophone $H_6$ to the hydrophone $H_7$. There are, in fact, a total of ten such ratios for different pairs of hydrophones and the computer 10 compares successive pairs of said periods to determine which of them (after due allowance has been made for any intervening zero-crossings by virtue of knowledge of the wave period $\tau$) are in accordance with one of the fixed ratios. This involves a total of ninety calculations.

Under ideal conditions, ten of the calculations just referred to should give the appropriate fixed ratio, thereby verifying that the time-difference measurements involved are in respect of the same wavefront, although in practice it is not uncommon for a lesser number of such verifications to be effected.

Once the time-difference measurement in respect of a pair of the hydrophones $H_5$ to $H_9$ has been verified, the direction of the source is calculated by the computer from the verified measurement. For example, assuming the time difference $t$ between the first zero-crossing detected by the hydrophone $H_6$ and the first zero-crossing detected by the hydrophone $H_9$ has been verified in respect of waves arriving in the direction of the arrow A and remembering that the distance between the hydrohones $H_6$ and $H_9$ is 1.618d, where $d$ is the distance between adjacent hydrophones, it follows that the direction of the source is at an angle $\alpha$ to a datum line 12 through the hydrophone array as given by the following expression:

$$\sin \alpha = ct/1.62d$$

where $c$ is the velocity of sound in water (after correction as in the first example described above).

It will be appreciated that waves emanating from the direction $180\alpha$ will give the same time difference measurement and, to remove this ambiguity and give a unique solution it is necessary for a similar calculation to be effected in respect of another verified time-difference measurement.

The construction of hydrophone array described above with reference to Figures 4 and 5 has the advantage that, unlike a linear array, it enables the hydrophone system to operate at wavelengths significantly less than the minimum physical spacing of the hydrophone. This is an important consideration if the spacing is comparable to the actual size of each hydrophone so that the spacing cannot be further reduced to extend the bandwidth.

When operating any of the hydrophone systems described above in an environment having a poor signal to noise ratio, it is necessary first to verify that a "good" signal is present. A number of threshold tests for achieving this have previously been proposed. For example the computer may be arranged, in response to zero-crossings detected by one of the hydrophones of the array, to determine the magnitude of the quantity $\tau - \bar{\tau}$, where $\tau$ has the meaning previously ascribed herein and $\bar{\tau}$ is the mean value of $\tau$ taken over a large number of zero-crossings (preferably weighted to favour more recent measurements), the computer being arranged only to perform the direction-finding calculations if this magnitude has less than a predetermined value.

## Claims

1. A hydrophone acoustic direction finding system comprising an array of hydrophone electro-acoustic transducers disposed along two orthogonal lines in a plane and measuring means responsive to periods between successive instants of zero-crossings of waves detected by the transducers of predetermined pairs of transducers in the array, characterised in that the array comprises at least five transducers ($H_0$—$H_4$) disposed in two groups each having at least three transducers, one of which ($H_0$) may be common to both groups, one group being along each said orthogonal line, the ratio of the spacings between predetermined different pairs of transducers in each of the two groups ($H_1$—$H_2/H_0$—$H_1$, $H_3$—$H_4/H_0$—$H_3$) having the same non-integral value, in that said measuring means (1, 2, 3) is responsive to periods between successive instants of zero-crossing of waves detected by a same transducer for at least one transducer of the array for determining the wavelength of waves impinging on the transducer array, and in that said measuring means (1, 2, 3) is responsive to periods between a zero-crossing detection in one transducer of a predetermined pair of transducers and the successive zero-crossing detection in the other transducer of that pair for said predetermined different pairs of transducers in each of the two groups for making a comparison of such periods in respect of said different pairs, for checking in which of said comparisons the compared periods correspond to the times for a wavefront to pass between the trasnducers of the compared pairs being in the said non-integral ratio after due allowance for the fact that at least one of said periods may be determined by transducers responding to zero-crossings of different waves, and for checking the results of said checking in one orthogonal line against the results of said checking in the other orthogonal line for determining the quadrant in said plane emanating from the array in which lies the source of waves impinging thereon.

2. A direction finding system according to Claim 1 wherein the ratio of the spacings of said different pairs of transducers is 1.5.

3. A hydrophone acoustic direction finding system comprising an array of at least three hydrophone electro-acoustic transducers ($H_5$—$H_9$) which are disposed in a plane so that no three of the transducers are in a straight line and measuring means responsive to periods between successive instants of zero-crossings of waves detected by the transducers of predetermined pairs of transducers in the array, characterised in that the array has five transducers ($H_5$—$H_9$) disposed at the corners of a regular pentagon, the ratio of the spacings between predetermined different pairs of transducers ($H_5$—$H_8/H_6$—$H_7$) in the array having the same non-integral value of substantially 1.62, in that said measuring means (9, 10) is responsive to periods between successive instants of zero-crossing of waves detected by a same transducer for at least one transducer of the array for determining the wavelength of waves impinging on the transducer array, and in that said measuring means (9, 10) is responsive to periods between a zero-crossing detection in one transducer of a predetermined pair of transducers and the successive zero-crossing detection in the other transducer of that pair for said predetermined different pairs of transducers for making a comparison of such periods in respect of said different pairs, for checking in which of said comparisons the compared periods correspond to the times for a wavefront to pass between the transducers of the compared pairs being in the said non-integral ratio after due allowance for the fact that at least one of said periods may be determined by transducers responding to zero-crossings of different waves, for verifying from said checking which periods are in respect of zero-crossings of the same wave and for determining from said verified periods the direction in said plane of the source of waves impinging on the array.

## Patentansprüche

1. Hydrophones akustisches Peilsystem enthaltend eine Anordnung aus hydrophonen elektroakustischen Wandlern, die längs zweier orthogonaler Geraden in einer Ebene angeordnet sind, und eine Meßeinrichtung, die auf Zeiträume zwischen aufeinanderfolgenden Zeitpunkten von Nulldurchgängen von Wellen anspricht, die von den Wandlern vorbestimmter Wandlerpaare in der Anordnung erfaßt werden, dadurch gekennzeichnet, daß die Anordnung wenigstens fünf Wandler ($H_0$—$H_4$) enthält, die in zwei Gruppen angeordnet sind, von denen jede aus wenigstens drei Wandlern besteht, von denen einer ($H_0$) beiden Gruppen gemeinsam angehöhren kann, wobei jeweils eine Gruppe längs einer der orthogonalen Geraden angeordnet ist und das Verhältnis der Abstände zwischen vorbestimmten verschiedenen Paaren von Wandlern in jeder der beiden Gruppen ($H_1$—$H_2/H_0$—$H_1$, $H_3$—$H_4/H_0$—$H_3$) denselben nicht ganzzahligen Wert hat, daß die Maßeinrichtung (1, 2, 3) anspricht auf Zeiträume zwischen aufeinanderfolgenden Zeitpunkten von Nulldurchgängen von Wellen, die durch einen selben Wandler für wenigstens einen Wandler der Anordnung erfaßt werden, zur Bestimmung der Wellenlänge auf die Wandleranordnung auftreffender Wellen, und daß die Meßeinrichtung (1, 2, 3) anspricht auf Zeiträume zwischen einer Nulldurchgangserfassung in einem Wandler eines vorbestimmten Wandlerpaares und der nachfolgenden Nulldurchgangserfassung in dem anderen Wandler dieses Paares für die vorbestimmten verschiedenen Paare von Wandlern in jeder der beiden Gruppen zur Bildung eines Vergleiches von solchen Zeiträumen in bezug auf die verschiedenen Paare, um zu überprüfen, in welchem dieser Vergleiche die verglichenen Zeiträume den Zeiten entsprechen, die eine Wellenfromt benötigt, um zwischen den Wandlern der verglichenen Paare, die in dem nicht ganzzahligen Verhältnis stehen, hindurchzulaufen, und zwar unter Berücksichtigung des Umstands, daß wenigstens einer dieser Zeiträume durch Wandler bestimmt sein kann, die auf Nulldurchgänge von verschiedenen Wellen ansprechen, und um die Ergebnisse dieser Überprüfung in einer orthogonalen Geraden gegenüber den Ergebnissen dieser Überprüfung in der anderen orthogonalen Geraden zu überprüfen, um in dieser Ebene, die von der Anordnung ausgeht, denjenigen Quadranten zu bestimmen, in dem die Quelle der auf die Anordnung auftreffenden Wellen liegt.

2. Peilsystem nach Anspruch 1, bei dem das Verhältnis der Abstände dieser verschiedenen Wandlerpaare gleich 1,5 ist.

3. Hydrophones akustisches Peilsystem enthaltend eine Anordnung aus wenigstens drei hydrophonen elektroakustischen Wandlern ($H_5$—$H_9$), die in einer Ebene derart angeordnet sind, daß keine drie der Wandler auf einer geraden Linie liegen, und eine Meßeinrichtung, die auf die Zeiträume zwischen aufeinanderfolgenden Zeitpunkten von Nulldurchgängen von Wellen ansprechen, die von den Wandlern vorbestimmter Wandlerpaare in der Anordnung erfaßt werden, dadurch gekennzeichnet, daß die Anordnung fünf Wandler ($H_5$—$H_9$) aufweist, die bei den Ecken eines regelmäßigen Fünfecks angeordnet sind, wobei das Verhältnis der Abstände zwischen vorbestimmten verschiedenen Paaren von Wandlern ($H_5$—$H_8$/$H_6$—$H_7$) in der Anordnung denselben nicht ganzzahligen Wert von etwa 1,62 hat, daß die Meßeinrichtung (9, 10) anspricht auf Zeiträume zwischen aufeinanderfolgenden Zeitpunkten von Nulldurchgängen von Wellen, die durch einen selben Wandler für wenigstens einen Wandler der Anordnung erfaßt werden, zum Bestimmen der Wellenlänge von Wellen, die auf die Wandleranordnung auftreffen, und daß die Meßeinrichtung (9, 10) anspricht auf Zeiträume zwischen einer Nulldurchgangserfassung in einem Wandler eines vorbestimmten Paares von Wandlern und der nachfolgenden Nulldurchgangserfassung in dem anderen Wandler dieses Paares für diese vorbestimmtne verschiedenen Paaren von Wandlern zur Bildung eines Vergleiches solcher Zeiträume bezüglich dieser verschiedenen Paare, um zu überprüfen, in welchem dieser Vergleiche die verglichenen Zeiträume den Zeiten entsprechen, die eine Wellenfront benötigt, um zwischen den Wandlern der verglichenen Paare, die in dem nicht ganzzahligen Verhältnis stehen, hindurchzulaufen, und zwar unter Berücksichtigung des Umstands, daß wenigstens einer dieser Zeiträume durch Wandler bestimmt sein kann, die auf Nulldurchgänge von verschiedenen Wellen ansprechen, um aus dieser Überprüfung zu verifizieren, welche Zeiträume in bezug zu Nulldurchgängen derselben Welle stehen, und um aus diesen verifizierten Zeiträumen in der genannten Ebene die Richtung der Quellen von Wellen zu bestimmen, die auf die Anordnung auftreffen.

**Revendications**

1. Système acoustique de détermination de direction à hydrophones, comprenant une matrice de transducteurs électro-acoustiques d'hydrophones placés suivant deux axes orthogonaux dans un plan et un dispositif de mesure sensible aux périodes comprises entre les instants successifs de passages à zéro des ondes détectées par les transducteurs de paires prédéterminées de transducteurs de la matrice, caractérisé en ce que la matrice comporte au moins cinq transducteurs ($H_0$—$H_4$) placés en deux groupes ayant chacun au moins trois transducteurs, l'un des transducteurs ($H_0$) pouvant être commun aux deux groupes, un premier groupe étant placé suivant l'axe orthogonal, le rapport des distances comprises entre les paires prédéterminées différentes de transducteurs de chacun des deux groupes ($H_1$—$H_2$/$H_0$—$H_1$, $H_3$—$H_4$/$H_0$—$H_3$) ayant la même valeur non entière, en ce que le dispositif de mesure (1, 2, 3) est sensible aux périodes comprises entre des instants successifs de passages à zéro des ondes détectées par un même transducteur, pour au moins un transducteur de la matrice, afin qu'il détermine la longueur d'onde des ondes parvenant sur la matrice de transducteurs, et en ce que le dispositif de mesure (1, 2, 3) est sensible à des périodes comprises entre une détection d'un passage à zéro dans un transducteur d'une paire prédéterminée de transducteurs et la détection suivante de passage à zéro de l'autre transducteur de cette paire, pour les paires différentes prédéterminées de transducteurs de chacun des deux groupes, afin qu'une comparaison des périodes soit réalisée pour les différentes paires, le dispositif étant destiné à vérifier dans quelle comparaison les périodes comparées correspondent aux temps de passages d'un front d'onde entre les transducteurs des paires comparées avec le rapport non entier, une fois tenu compte du fait que l'une au moins des périodes peut être déterminée par des transducteurs répondant à des passages à zéro d'ondes différentes, et le dispositif étant destiné à vérifier les résultats de ladite vérification dans un axe orthogonal d'après les résultats de la vérification suivant l'autre axe orthogonal afin que le quadrant dans lequel se trouve la source des ondes incidentes soit déterminé dans ledit plan émanant de la matrice.

2. Système de détermination de direction selon la revendication 1, dans lequel le rapport des distances des différentes paires de transducteurs est égal à 1,5.

3. Système acoustique de détermination de direction à hydrophones, comprenant une matrice d'au moins trois transducteurs électro-acoustiques d'hydrophones ($H_5$—$H_9$) qui sont disposés dans un plan tel que trois des transducteurs ne soient pas alignés, et un dispositif de mesure sensible aux périodes comprises entre les instants successifs de passages à zéro des ondes détectées par les transducteurs des paires déterminées de transducteurs de la matrice, caractérisé en ce que la matrice a cinq transducteurs

(H$_5$—H$_9$) placés aux coins d'un pentagone régulier, le rapport des distances entre des paires différentes prédéterminées de transducteurs (H$_5$—H$_8$/H$_6$—H$_7$) de la matrice ayant la même valeur non entière sensiblement égale à 1,62, en ce que le dispositif de mesure (9, 10) est sensible aux périodes comprises entre des instants successifs de passages à zéro des ondes détectées par un même transducteur, pour au moins un transducteur de la matrice, afin que la longueur d'onde des ondes parvenant sur la matrice de transducteurs soit déterminée, et en ce que le dispositif de mesure (9, 10) est sensible aux périodes comprises entre une détection de passage à zéro dans un transducteur d'une paire prédéterminée de transducteurs et la détection du passage suivant à zéro de l'autre transducteur de sa paire, pour les paires prédéterminées différentes de transducteurs afin qu'une comparaison des périodes des différentes paires soit réalisée, le dispositif étant destiné à vérifier dans quelle comparaison les périodes comparées correspondent au temps de passages d'un front d'onde entre les transducteurs des paires comparées dans le rapport non entier une fois tenu compte du fait que l'une au moins des périodes peut être déterminée par des transducteurs répondant à des passages à zéro d'ondes différentes, le dispositif étant destiné à vérifier, à partir de la vérification précédente, les périodes qui correspondent à des passages à zéro de la même onde, et étant destiné à déterminer, à partir des périodes vérifiées, la direction de la source des ondes parvenant sur la matrice dans ledit plan.

Fig. 1.

Fig. 4.

## Fig. 2.

## Fig. 3.

## Fig.5.